# EUROPEAN PATENT SPECIFICATION

(11) **EP 2 787 216 B1**
(45) Date of publication and mention of the grant of the patent: **26.07.2017**
(21) Application number: 14163017.8
(22) Date of filing: 01.04.2014
(51) Int. Cl.: F04B 39/16, B01D 46/00, F04B 53/20

(54) **System and filter indicator gauge**
Filtersystem und Filteranzeigemessgerät
Système et jauge indicatrice de filtre

(30) Priority: 01.04.2013 US 201361807275 P
(43) Date of publication of application: 08.10.2014
(73) Proprietor: Ingersoll-Rand Company, Davidson, NC 28036 (US)
(72) Inventor: Jakop, Janez, 1370 Logatec (SI)
(74) Representative: McCartney, Jonathan William

(56) References cited:
- WO-A1-92/16801
- US-A- 5 033 271
- US-A- 5 222 369
- US-A- 5 272 882
- US-A- 5 327 741

## Description

### TECHNICAL FIELD

The present disclosure generally relates to gauges used with systems having filters, and more particularly, but not exclusively, to gauges that display parameters relating to compressor system operation.

Systems including a compressor, a filter and a gauge operative to indicate a parameter of the compressor e.g. pressure are well known from different technical fields e.g. a refrigeration system as disclosed in each of the documents US-A- 5 033 271, US-A-5 327 741, US-A-5 222 369.

### BACKGROUND

Providing enhanced monitoring of a compression process remains an area of interest. Some existing systems have various shortcomings relative to certain applications. Accordingly, there remains a need for further contributions in this area of technology.

### SUMMARY

One embodiment of the present disclosure includes a unique system having a compressor, a filter and a gauge operative to simultaneously indicate at least two different parameters with a unitary movable indicator. Other embodiments include apparatuses, systems, devices, hardware, methods, and combinations for indicating system performance, e.g., including compressor performance. Further embodiments, forms, features, aspects, benefits, and advantages of the present application shall become apparent from the description and figures provided herewith.
FIG. 1 schematically illustrates some aspects of a non-limiting example of a system employing a multiple indicator gauge in accordance with an embodiment of the present invention.
FIG. 2 schematically illustrates some aspects of a non-limiting example of a multiple indicator gauge in accordance with an embodiment of the present invention.
FIG. 3 schematically illustrates some aspects of a non-limiting example of a multiple indicator gauge in accordance with another embodiment of the present invention.

### DETAILED DESCRIPTION OF THE ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

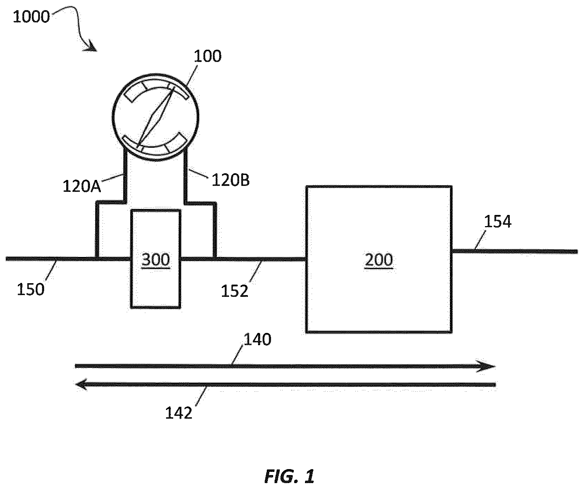

Referring to FIG. 1 , some aspects of a non-limiting example of an exemplary embodiment of a system 1000 are depicted. In one form, system 1000 is configured to filter and compress air. In other embodiments, system 1000
may be configured to only compress air, only filter air, or filter and/or compress air in addition to performing other functions. In one form, system 1000 includes a multiple indicator gauge 100, a compressor 200, and a filter 300. Gauge 100 is in fluid communication with filter 300, and filter 300 is in fluid communication with compressor 200. In some embodiments, such as that illustrated in FIG. 1, gauge 100 may also be considered to be in fluid communication with compressor 200. In one form, the general course of airflow is in direction 140, whereby filter 300 is disposed and structured to filter air that is supplied to compressor 200. In other embodiments, the general course of air flow may be in direction 142, whereby filter 300 is disposed and structured to filter air that is discharged from compressor 200. In either case, gauge 100 is configured to detect the pressure drop across filter 300, and to display one or more parameters as set forth herein.

In one form, air is supplied to filter 300 by a line 150, and air is discharged from filter 300 via a line 152 and supplied to compressor 200. Compressor 200 discharges the compressed air via discharge line 154. Multiple indicator gauge 100 is in fluid communication with line 150 on a filter input side or high pressure side via a high pressure line 120A. Multiple indicator gauge 100 is in fluid communication with line 152 on a filter discharge side or low pressure side via a low pressure line 120A. It will be understood that lines 150, 152 and 154 are pressurized air lines, e.g., which may take the form of tubing, piping, hosing, and/or internal passages in one or more components, such as filter 300 and/or compressor 200. Similarly, lines 120A and 120B are air pressure lines, which may also take the form of tubing, piping, hosing, and/or internal passages in one or more components, such as filter 300 and/or compressor 200. In one form, air is supplied to system 1000 via line 150. In the illustrated embodiment, compressor 200 is configured to compress air that is received through line 152 after the air has passed through filter 300, but it will be appreciated that in other embodiments the relative placement of the components can be rearranged or different than that depicted and described herein. Though compressor 200 may be referred to compressing air, it will be appreciated that the compressor 200 can be used to compress many different types of compressible fluids other than air. Thus, the description that follows may use the terms, "fluid," "gas" and "air", etc., but it will be appreciated that no limitation is intended regarding any particular form of compressible fluid useful with the embodiments herein. During operation of compressor 200, filter 300 increasingly collects contaminants from the air entering therein via line 150. As the amount of collected contaminants increases, the pressure drop across filter 300 correspondingly increases, whereby the static pressure measured upstream of filter 300, e.g., in line 150, will be increasingly higher than the static pressure measured at a location downstream of filter 300, e.g., in line 152.

Compressor 200 is a powered mechanical compressor, such as, but not limited to, a scroll pump, used to compress a gas. In some embodiments the reference numeral 200 also includes one or both of a motor (e.g. an electric motor or an engine) used to drive the compressor, as well as a tank used to receive and store the compressed gas. It is contemplated that the compressed gas can be used for any type of end user such as, but not limited to, pneumatic powered tools, facility air, etc.

Filter 300 in the depicted embodiment is in fluid communication with pressure line 152, and is configured to trap contaminants present in the gas to be compressed by compressor 200. In one form, filter 300 is configured to capture particulate matter. In other embodiments, filter 300 may be configured to capture liquids, such as water, oil and/or fuel. In various embodiments, filter 300 may take on any variety of forms and can include one or multiple separate filtering elements suitable for the particular application. The filter may be constructed of paper and/or fiber media, among potential others, and may be configured to be readily replaceable and/or rechargeable. As discussed above, the filter will impose an increasing pressure loss in the fluid as the filter collects increasing amounts of contaminants. This pressure loss can be detected by sampling pressure in the gas at different stream locations.

The locations from which upstream and downstream pressures are measured are depicted in the illustrated embodiment as being placed a distance away from the filter 300, but other embodiments can include pressures measured at one or more different locations. For example, the upstream pressure can be sampled on the immediate upstream face of the filter 300, internal or external to filter 300 and/or the downstream pressure can be sampled on the immediate downstream face of the filter 300, internal or external to filter 300. In some forms one or both of the upstream and downstream locations can be within a portion of the filter 300.

In some embodiments, line 152 and filter 300 may be integrated together with the compressor 200, e.g., in an integrated or standalone unit, although many other variations are contemplated.

Gauge 100 is structured to react to the pressure drop caused by the filter, and in the illustrated embodiment the downstream pressure tap is coupled directly to the compressor line 152. The upstream side to which the gauge 100 pressure tap is coupled can be a line similar to compressor line 152. Thus, in the illustrated embodiment gauge 100 is in communication with a high pressure side of filter 300 via high pressure tap or tube 120A, and is in communication with a low pressure side of filter 300 via low pressure tap or tube 120B.

In the illustrated embodiment, gauge 100 is a differential pressure sensor configured to sense and indicate a pressure loss across filter 300. Gauge 100 may be configured to react and indicate the differential pressure using any number of techniques. In one form the gauge 100 includes a diaphragm or alternatively a bourdon tube that displaces when exposed to pressure, e.g., to differential pressure, and the displacement is used to drive the movement of an indicator related to the gauge 100. Other additional and/or alternative manners of detecting differential pressure are contemplated. By way of non-limiting examples, gauge 100 can include a solid state piezoresistive silicon differential pressure sensor, a capacitive sensor, a bonded strain gauge sensor, a bonded foil gauge sensor, a diaphragm sensor, or a microelectromechanical systems (MEMS) sensor. The differential pressure sensor may set the position of needle 112 (described in detail below) directly, as would be the case with a bourdon-type differential pressure sensor. Alternatively, gauge 100 may include a controller (not shown) configured to command the needle to a given position based upon information received from the differential pressure sensor. It will be understood that gauge 100 may take one or more of various forms, and may be configured to measure the pressure drop across filter 300, e.g., as a differential pressure, using any number of techniques.

In the embodiment illustrated in FIG. 1, lines 120A and 120B are a high pressure tube and a low pressure tube, respectively. In other embodiments, lines 120A and 120B may be a means to convey a signal of a measurement while the measurement is conducted elsewhere, e.g., wired, wireless or optical communication links configured to send pressure signals from the sensor locations to gauge 100. For example, the measurement may be taken by a pressure sensor while the gauge both interprets and indicates the value of that measured data. Alternatively, the data measured by the pressure sensor may be interpreted elsewhere, such as by a microprocessor, and the gauge merely indicates the differential pressure or information derived from and/or used in the determination of differential pressure.

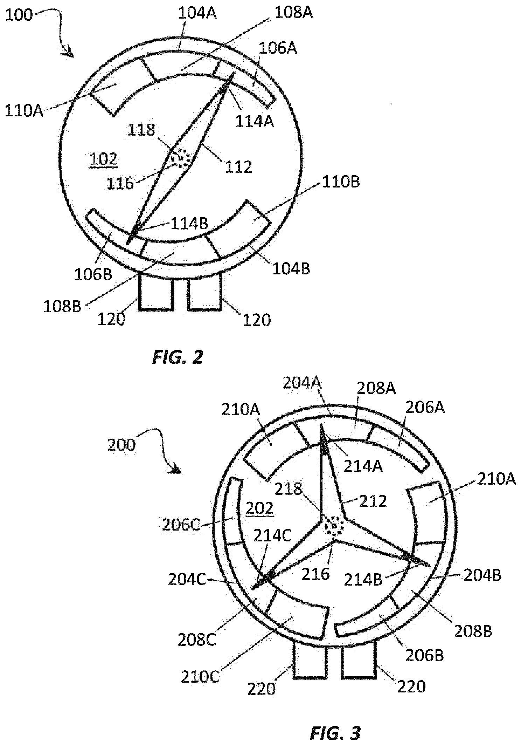

Referring to FIG. 2, some aspects of a non-limiting example of gauge 100 in accordance with an embodiment of the present invention are schematically depicted. Gauge 100 includes a gauge face 102 having a plurality of indicator scales 104A and 104B. Scales 104A and 104B may be labeled such that each delineates a range of one or more properties, each in different units, whether the properties are measured or derived properties. In one non-limiting example, scale 104A may be labeled in metric units, while scale 104B may be labeled in English units. Alternatively, scales 104A and 104B may be labeled such that each delineates a range of a different, but related, property. For example, scale 104A may indicate the differential pressure across filter 300, while scale 104B indicates a system efficiency. In one form, scale 104A is a differential pressure, e.g., the pressure drop across filter 300. In other embodiments, scale 104A may be related to a static pressure, e.g., in line 152 or line 150. As would be understood by those having skill in the art, a greater differential pressure across filter 300 indicates greater blockage of the filter, and hence a lower system 1000 efficiency.

The impact/costs of operating the compressor 200 with a dirty filter may be expressed as some type of measure of system efficiency, and in general will be understood to relate to an economic loss associated with operating the compressor 200 with a dirty filter. In certain embodiments, the measure of system efficiency may be a monetary cost required to operate the compressor 200. In one form, scale 104B may be labeled to indicate the cost efficiency of the filter in terms of monetary unit/volume/time, such as dollars/m³/hr. The cost may be an incremental cost in operating the compressor 200, and in some forms the cost may be representative of a total cost in operating the compressor. In other alternative and/or additional embodiments, scale 104B may represent an estimate of lost productivity. In general, impact/cost displayed by the gauge 100 via scale 104B may be represented in various embodiments by quantitative and/or qualitative measures.

Scales 104A, 104B, e.g., the gradations of scales 104A, 104B, may be indicated or differentiated by the use of different colors, color intensities or the like, and/or by different hatching and/or numerical data. The gradations are illustrated as sections or zones 106A, 106B, 108A, 108B, 110A, 110B are indicative of various operating conditions. In the illustrated embodiment, scales 104A, 104B may be divided into three sections or zones 106A, 106B, 108A, 108B, 110A, 110B. In other embodiments, any number of gradations or sections or zones may be employed. In one form, the gradations pertain to, for example, a normal operating zone 106A, 106B; a marginal operating zone 108A, 108B; and a critical operating zone 110A, 110B. Depending on operability desires, filter 300 may be replaced and/or regenerated at any time, and hence the terms "marginal" or "critical" are meant in a relative sense only. In some applications, however, the terms "marginal" or "critical" can mean that system 1000, e.g., compressor 200 performance, life and/or operability are being or may be detrimentally impacted by continued operation, for example, in terms of providing compressed fluids for an end user. Generally, scales 104A, 104B represent an arc segment about the axis of rotation 118 (discussed in detail below) but other shapes are contemplated for the various embodiments of scales discussed herein.

In some embodiments, scales 104A and 104B are printed or otherwise fixedly mounted to gauge face 102. In other embodiments, one or more of scales 104A and 104B is removable and replaceable, such that the ranges can be altered so as to compensate for changes in or modifications to system 1000. In still other embodiments, one or more of scales 104A and 104B may be an electronic display, for example, including a plurality of light-emitting diodes. In such embodiments, the electronic display may be set by a controller or user interface (not shown). In still further embodiments, the scales can be moveable and the needle, or other similar indication, can be fixed. The variations associated with the embodiment depicted in FIG. 2 are also contemplated as being applicable to other embodiments of the gauge.

Various embodiments of the present invention employ a unitary movable indicator that moves in relation to pressure drop across filter 300 to simultaneously provide visible indications as to two or more different parameters pertaining to system 1000 performance, efficiency, health, life, or the like. For example, in one form, an indicator needle 112 is provided with first and second indicating ends 114A, 114B. Generally, the number of indicating ends, e.g., 114A, 114B is equal to the number of scales, e.g., 104A, 104B on the dial face 102. The needle 112 is pivotably or rotatably mounted to the gauge 100 via a post 116, and pivots or rotates in response to the property being measured. The post 116 extends from a back surface of the indicator needle that faces the dial face 102 and extends through the dial face 102 into the inner mechanism of the gauge 100. The post 116 has an axis of rotation 118 about which the indicator needle 112 pivots or rotates. The axis of rotation acts as a common pivot point about which each indicating end 114A, 114B pivots or rotates. Each indicating end 114A, 114B is associated with a particular scale 104A, 104B. As shown, the first indicating end 114A is associated with the first scale 104A, and the second indicating end 114B is associated with the second scale 104B. Indicating ends 114A, 114B may overlap their associated scales 104A, 104B, e.g., radially, or otherwise point to a location on respective scales 104A, 104B so that a user can observe and determine the value of the measured property.

As needle 112 pivots in response to a measured property, indicating ends 114A, 114B are generally limited in motion to the arc segment that its associated scale 104A, 104B represents. In other words, a particular indicating end 114A, 114B is generally limited to only being able to point to a location within its associated scale 104A, 104B. Because the illustrated embodiment has two scales in discrete locations, the needle 112 will generally not be capable of making a full rotation. It is appreciated, however, that other configurations may make this possible should the two scales 104A, 104B overlap one another.

With reference to FIG. 3, another example embodiment of a multiple indicator gauge 200 for indicating a range of one or more values of a property is provided. The gauge 200 is provided with a dial or dial face 202 that has a first indicator scale 204A thereon. In a separate and discrete location, a second indicator scale 204B is also provided on the dial face 202. At yet another separate and discrete location, a third indicator scale 204C is provided on the dial face 202. Scales 204A, 204B, 204C may include labels to delineate ranges of one or more properties, including measured or derived properties, in one or more units. In an exemplary embodiment, gauge 200 is configured to sense and indicate a differential pressure. In some embodiments, scale 204A is labeled with metric units, scale 204B is labeled with English units, and scale 204C is labeled with a system efficiency.

Scales 204A, 204B, 204C include gradations that may be in the form of colored, or otherwise delineated, sections or zones 206A, 206B, 206C, 208A, 208B, 208C, 210A, 210B, 210C indicating various operating conditions or parameters. In one form, the scales 204A, 204B, 204C may be divided into three sections or zones 206A, 206B, 206C, 208A, 208B, 208C, 210A, 210B, 210C such as, for example, a normal operating zone 206A, 206B, 206C; a marginal operating zone 208A, 208B, 208C; and a critical operating zone 210A, 210B, 210C. In other embodiments, scales 204A, 204B, 204C may be divided into any number of gradations, sections or zones, greater or lesser in number. Generally, the scales 204A, 204B, 204C represent an arc segment about the axis of rotation 218 (discussed in detail below).

A unitary movable indicator in the form of indicator needle 212 is provided with a first, second, and third indicating ends 214A, 214B, 214C. Generally, the number of indicating ends 214A, 214B, 214C is equal to the number of scales 204A, 204B, 204C on the dial face 202. Needle 212 is rotatably mounted to the gauge 200 via a post 216, and pivots or rotates in response to the property being measured. Post 216 extends from a back surface of the indicator needle that faces the dial face 202, and extends through the dial face 202 into the inner mechanism of the gauge 200. Post 216 has an axis of rotation 218 about which the indicator needle 212 pivots or rotates. Axis of rotation 218 acts as a common pivot point about which each indicating end 214A, 214B, 214C pivots or rotates. Each indicating end 214A, 214B, 214C is associated with a particular scale 204A, 204B, 204C. For example, as illustrated in FIG. 3, the first indicating end 214A is associated with the first scale 204A, the second indicating end 214B is associated with the second scale 204B, and the third indicating end 214C is associated with the third scale 204C. An indicating end 214A, 214B, 214C may overlap its associated scale 204A, 204B, 204C or otherwise point to a location on the scale 204A, 204B, 204C so that a user can determine the value of the measured property.

As the needle 212 pivots in response to a change in a property, e.g., a change in the pressure drop across filter 300, indicating ends 214A, 214B, 214C rotate and are displaced along the arcs represented by associated scales 204A, 204B, 204C. The rotation of needle 212 and the rotational or circumferential displacement of indicating ends 214A, 214B, 214C are generally limited to the arc segments associated with scales 204A, 204B, 204C. That is, a particular indicating end 214A, 214B, 214C is generally limited to pointing to a location within its associated scale 204A, 204B, 204C. Because the illustrated embodiment has three scales in discrete locations, the needle 212 of that embodiment will generally not be capable of making a full rotation. It will be understood, however, that other configurations may make greater degrees of rotation possible, for example, wherein scales 204A, 204B, 204C overlap one another.

While the shown gauge 200 has three indicating ends and associated scales, it will be understood that greater or lesser numbers of indicating ends and associated scales may be provided. The gauge 200 may further be provided with one or more input ports 220 similar to those discussed above with respect to FIG. 2.

In FIG. 2, the scales 104A, 104B are depicted on opposite sides of the dial face 102 and the indicating ends 114A, 114B extend from the post 116 at an angle of 180° from each other. However, it is possible for the scales 104A, 104B to be in other locations, and the indicating ends 114A, 114B may extend from the post 116 at a relative angle less than 180° with respect to each other. For example in FIG. 3, the indicator needle 212 has three indicating ends 214A, 214B, 214C that extend from the post at a relative angle of 120° with respect to their adjacent indicating end 214A, 214B, 214C.

The scales 104A, 104B, 204A, 204B, 204C may correlate to one another and may be proportional to one another with a 1:1 ratio or any other proportional relationship. Furthermore, the gauge 100, 200 may be configured to measure and/or indicate any number of a variety of values that are measured and/or derived, e.g., associated with filter 300, such as the pressure drop across filter 300. For example, the gauge 100, 200 can be configured to indicate a pressure; a temperature; a voltage (e.g. from an electronic pressure transducer); a current; a resistance; a differential of any of the aforementioned properties; an efficiency value, such as an economic efficiency value, e.g., cost; or an energy efficiency value; or a system 1000 health parameter, e.g., indications of normal operating conditions, marginal operating conditions or critical operating conditions such as might pertain to respective degrees of blockage of filter 300.

For example, the first scale 104A of the gauge 100 in FIGS. 1 and 2 may be used to indicate a pressure differential across the air filter 300, while the second scale 104B indicates a cost efficiency for running the compressor 200, it being understood that the greater the degree of blockage of filter 300, the corresponding greater cost to operate compressor 200. The first scale 104A may indicate the pressure differential in bar and also be divided into zones 106A, 108A, 110A representing: normal operation 106A, such as the filter 300 is working properly; marginal operation 108A, such as the filter 300 will need to be changed or cleaned soon; and a critical operating condition 110A that may indicate a condition that needs to be addressed, such as the filter 300 needs to be changed or cleaned. Similarly, the second scale 104B may indicate the cost efficiency of the filter in terms of monetary unit/volume/time, such as dollars/m³/hour, and may also be divided into zones 106B, 108B, 110B, for example, with 106B representing normal operation, 108B representing marginal operation, and 110B representing a critical operating condition that may indicate a situation or occurrence that needs to be addressed. In addition, the zones may be color coded, such as, for example, wherein the normal operation zones 106A, 106B may be green, the marginal operation zones 108A, 108B may be yellow, and the critical operating condition zones 110A, 110B may be red. As used herein, a pressure differential scale that uses colors such as red, yellow, and green can represent, for example, that: the filter element needs to be changed, the filter element should preferably be changed within some number of operating hours, and the filter element condition is nominal and acceptable for continued operation until gauge 100 indicates otherwise, respectively. Furthermore, an economic scale that uses colors such as red, yellow, and green can represent that the running cost is normal, that the running cost is increasing, and that the running cost is high, respectively. These colors can be used in any of the embodiments above and can, but need not, be coupled with a numeric value associated with one or more of the colors. While specific units and colors have been discussed above, any other units or measures of efficiency, and color coding, are also contemplated.

Embodiments of the present invention include an apparatus, comprising: an air compressor; a filter in fluid communication with the air compressor; the filter being structured to capture contaminants from air received therein and to provide filtered air, the filter having a pressure drop associated therewith that increases in relation to the amount of captured contaminants; an indicator gauge in fluid communication with the filter, the indicator gauge including a unitary movable indicator operative to move in relation to the pressure drop across the filter, wherein the unitary movable indicator is structured to provide a first visible indication related to a pressure and simultaneously provide a second visible indication related to an economic parameter associated with operating the air compressor while the filter is in the state of having accumulated the amount of captured contaminants corresponding to the pressure drop.

In a refinement, the filter is located upstream of the compressor and is configured to supply filtered air to the air compressor.

In another refinement, the filter is located downstream of the compressor and is structured to filter air discharged from the air compressor.

In yet another refinement, the unitary movable indicator is a pivotable needle having a first end and a second end; the first end provides the indication relating to pressure; and the second end provides the indication relating to the economic parameter.

In still another refinement, the apparatus further comprises a first pressure tap and a second pressure tap, wherein the first pressure tap communicates a pressure upstream of the filter to the indicator gauge; and wherein the second pressure tap communicates a pressure downstream of the filter to the indicator gauge.

In yet still another refinement, the indicator gauge includes a first static color coded scale indicating a plurality of degrees of contamination of the filter, and wherein the unitary movable indicator includes a first end paired with the first static color coded scale.

In a further refinement, the indicator gauge includes a second static color coded scale indicating a plurality of degrees of the economic parameter, and wherein the unitary movable indicator includes a second end paired with the second static color coded scale.

Embodiments of the present invention include an apparatus, comprising: a fluid intake line operative to supply a fluid; a filtered fluid line; a filter having an inlet in fluid communication with the fluid intake line and an exit in fluid communication with the filtered fluid line; the filter being structured to capture contaminants from the supplied fluid to generate filtered fluid, and to deliver the filtered fluid to the filtered fluid line; the filter having a pressure drop associated therewith that increases in relation to the amount of captured contaminants; a compressor in fluid communication with the filtered fluid line and operative to receive filtered fluid from the filter and compress the received filtered fluid; and an indicator gauge in fluid communication with the filter inlet and the filter exit, the indicator gauge being structured to react to a pressure drop across the filter during operation of the compressor, wherein the indicator gauge includes a unitary movable indicator operative to move in relation to the pressure drop and to display both a first indication related to a pressure in at least one of the fluid intake line and the filtered fluid line, and also display a second indication related to an economic cost associated with operating the compressor with the filter having accumulated an amount of captured contaminants corresponding to the pressure drop.

In a refinement, the pressure indicated by the indicator gauge is a differential pressure associated with filter, the differential pressure being determined by a pressure upstream of the filter and a pressure downstream of the filter.

In another refinement, the unitary movable indicator is a pivoting needle.

In yet another refinement, the pivoting needle includes a pivot point and at least two ends extending from the pivot point, wherein one end indicates a pressure of the fluid and the other end indicates an economic impact.

In still another refinement, the pivoting needle includes only two ends on opposite sides of the pivot point.

In yet still another refinement, the economic cost is a monetary scale that indicates a range between a relatively low monetary impact and a relatively high monetary impact.

In a further refinement, the compressor includes a motor driving a compression member and a fluid tank that receives the compressed fluid.

Embodiments of the present invention include a method, comprising: powering a compressor to pressurize a fluid; flowing fluid through a filter to remove contaminants; sensing a pressure drop across the filter; moving an indicator and a scale relative to each other in response to the pressure drop; and displaying a fluid pressure parameter and a monetary cost of the powering as a result of the moving.

In a refinement, the displaying includes sweeping the indicator past a scale having a low side and a high side.

In another refinement, the displaying includes sweeping a first end of the indicator past a first scale and sweeping a second end of the indicator past a second scale.

In still another refinement, wherein the displaying includes color coding at least one of the pressure parameter and the monetary cost.

In yet still another refinement, the method further includes storing the pressurized fluid in a tank.

In a further refinement, the method further includes mechanically compressing the fluid, and wherein the flowing of the fluid through the filter occurs upstream of the mechanically compressing.

While the invention has been illustrated and described in detail in the drawings and foregoing description, the same is to be considered as illustrative and not restrictive in character, it being understood that only the preferred embodiments have been shown and described and that all changes and modifications that come within the spirit of the inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. An apparatus (1000), comprising:
a compressor (200);
a filter (300) in fluid communication with the compressor (200); the filter (300) being structured to capture contaminants from a fluid received therein and to provide filtered fluid, the filter (300) having a pressure drop associated therewith that increases in relation to the amount of captured contaminants; and
an indicator gauge (100) in fluid communication with the filter (300), the indicator gauge (100) including a unitary movable indicator operative to move in relation to the pressure drop across the filter (300);
**characterized in that** the unitary movable indicator is structured to provide a first visible indication related to a pressure and simultaneously provide a second visible indication related to an economic parameter associated with operating the compressor (200) while the filter (300) is in the state of having accumulated the amount of captured contaminants corresponding to the pressure drop.

2. The apparatus of claim 1, wherein the filter (300) is located upstream of the compressor (200) and is configured to supply filtered fluid to the compressor (200).

3. The apparatus of claim 1, wherein the filter (300) is located downstream of the compressor (200) and is structured to filter fluid discharged from the compressor (200).

4. The apparatus of claim 1, wherein the unitary movable indicator is a pivotable needle (112; 212) having a first end (114A; 214A) and a second end (114B; 214B); wherein the first end (114A; 214A) provides the indication relating to pressure; and wherein the second end (114B; 214B) provides the indication relating to the economic parameter.

5. The apparatus of claim 1, further comprising a first pressure tap (120A) and a second pressure tap (120B), wherein the first pressure tap (120A) communicates a pressure upstream of the filter (300) to the indicator gauge (100); and wherein the second pressure tap (120B) communicates a pressure downstream of the filter (300) to the indicator gauge (100).

6. The apparatus of claim 1, wherein the indicator gauge (100) includes a first static color coded scale (104A; 204A) indicating a plurality of degrees of contamination of the filter (300), and wherein the unitary movable indicator includes a first end (114A; 214A) paired with the first static color coded scale (104A; 204A).

7. The apparatus of claim 6, wherein the indicator gauge (100) includes a second static color coded scale (104B; 204B) indicating a plurality of degrees of the economic parameter, and wherein the unitary movable indicator includes a second end (114B; 214B) paired with the second static color coded scale (104B; 204B).

8. The apparatus of any one of claims 1 to 7, further comprising:
a fluid intake line (150) operative to supply a fluid;
a filtered fluid line (152); wherein
the filter (300) has an inlet in fluid communication with the fluid intake line (150) and an exit in fluid communication with the filtered fluid line (152) and is structured to deliver the filtered fluid to the filtered fluid line (152)" wherein
the compressor (200) is in fluid communication with the filtered fluid line (152) and operative to receive filtered fluid from the filter (300) and compress the received filtered fluid; wherein
the indicator gauge (100) is in fluid communication with the filter inlet and the filter exit and structured to react to a pressure drop across the filter (200) during operation of the compressor (200); and wherein the a unitary movable indicator is operative to move in relation to the pressure drop and to display both a first indication related to a pressure in at least one of the fluid intake line (150) and the filtered fluid line (152), and also display a second indication related to an economic cost associated with operating the compressor (200) with the filter (300) having accumulated an amount of captured contaminants corresponding to the pressure drop.

9. The apparatus of claim 8, wherein the pressure indicated by the indicator gauge (100) is a differential pressure associated with filter (300), the differential pressure being determined by a pressure upstream of the filter (300) and a pressure downstream of the filter (300).

10. A method, comprising:
powering a compressor (200) to pressurize a fluid;
flowing fluid through a filter (300) to remove contaminants;
sensing a pressure drop across the filter (300); and
moving an indicator and a scale relative to each other in response to the pressure drop,
**characterized by** displaying a fluid pressure parameter and a monetary cost of the powering as a result of the moving.

11. The method of claim 10, wherein the displaying includes sweeping the indicator past a scale (104A, 104B; 204A, 204B, 204C) having a low side and a high side.

12. The method of claim 10, wherein the displaying includes sweeping a first end (114A; 214A) of the indicator past a first scale (104A; 204A) and sweeping a second end (114B; 214B) of the indicator past a second scale (104B; 204B).

13. The method of claim 10, wherein the displaying includes color coding at least one of the pressure parameter and the monetary cost.

## Patentansprüche

1. Eine Vorrichtung (1000), umfassend:
einen Kompressor (200);
einen Filter (300) in Fluidverbindung mit dem Kompressor (200); wobei der Filter (300) so aufgebaut ist, dass er Verunreinigungen aus einem darin aufgenommenen Fluid erfasst und ein gefiltertes Fluid liefert, wobei der Filter (300) einen damit verbundenen Druckabfall aufweist, der mit der Menge an erfassten Verunreinigungen zunimmt; und
ein Anzeigeinstrument (100), das mit dem Filter (300) in Fluidverbindung steht, wobei das Anzeigeinstrument (100) einen mittig gelagerten Zeiger aufweist, der sich entsprechend dem Druckabfall am Filter (300) bewegt;
**dadurch gekennzeichnet ist, dass** der mittig gelagerte Zeiger so aufgebaut ist, dass er eine erste sichtbare Anzeige liefert, die sich auf den Druck bezieht und gleichzeitig eine zweite sichtbare Anzeige liefert, die sich auf einen mit dem Betrieb des Kompressors (200) verbundenen wirtschaftlichen Parameter bezieht, wenn der Filter (300) entsprechend dem Druckabfall eine gewisse Menge an Verunreinigungen angesammelt hat.

2. Die Vorrichtung gemäß Anspruch 1, wobei der Filter (300) vor dem Kompressor (200) angeordnet ist und so ausgelegt ist, dass er dem Kompressor (200) gefiltertes Fluid zuführt.

3. Die Vorrichtung gemäß Anspruch 1, wobei der Filter (300) nach dem Kompressor (200) angeordnet ist und so ausgelegt ist, dass er vom Kompressor (200) abgegebenes Fluid filtert.

4. Die Vorrichtung gemäß Anspruch 1, wobei der mittig gelagerte Zeiger eine drehbare Nadel (112; 212) mit einem ersten Ende (114A; 214A) und einem zweiten Ende (114B; 214B) ist; wobei das erste Ende (114A; 214A) die Anzeige bezüglich des Drucks liefert; und wobei das zweite Ende (114B; 214B) die Anzeige bezüglich des wirtschaftlichen Parameters liefert.

5. Die Vorrichtung gemäß Anspruch 1, ferner umfassend eine erste Druckmessstelle (120A) und eine zweite Druckmessstelle (120B), wobei die erste Druckmessstelle (120A) den Druck vor dem Filter (300) an das Anzeigeinstrument (100) kommuniziert; und wobei die zweite Druckmessstelle (120B) den Druck nach dem Filter (300) an das Anzeigeinstrument (100) kommuniziert.

6. Die Vorrichtung gemäß Anspruch 1, wobei das Anzeigeinstrument (100) eine erste statische farbkodierte Skala (104A; 204A) aufweist, die eine Vielzahl von Verschmutzungsgraden des Filters (300) anzeigt und wobei der mittig gelagerte Zeiger ein erstes Ende (114A; 214A) aufweist, das mit der ersten statischen farbkodierten Skala (104A; 204A) gepaart ist.

7. Die Vorrichtung gemäß Anspruch 6, wobei das Anzeigeinstrument (100) eine zweite statische farbkodierte Skala (104B; 204B) aufweist, die eine Vielzahl von Graden des wirtschaftlichen Parameters anzeigt und wobei der mittig gelagerte Zeiger ein zweites Ende (114B; 214B) aufweist, das mit der zweiten statischen farbkodierten Skala (104B; 204B) gepaart ist.

8. Die Vorrichtung gemäß einem der Ansprüche 1 bis 7, ferner umfassend:
eine Fluideinlassleitung (150), die ein Fluid zuführt;
eine gefilterte Fluidleitung (152); wobei
der Filter (300) einen Einlass aufweist, der mit der Fluideinlassleitung (150) in Fluidverbindung steht und einen Auslass aufweist, der mit der gefilterten Fluidleitung (152) in Fluidverbindung steht und so ausgelegt ist, dass er das gefilterte Fluid der gefilterten Fluidleitung (152) zuführt, wobei der Kompressor (200) mit der gefilterten Fluidleitung (152) in Fluidverbindung steht und dazu dient, gefiltertes Fluid aus dem Filter (300) zu empfangen und das empfangene gefilterte Fluid zu komprimieren; wobei
das Anzeigeinstrument (100) mit dem Filtereinlass und dem Filterauslass in Fluidverbindung steht und so aufgebaut ist, dass es beim Betrieb des Kompressors (200) auf einen Druckabfall am Filter (200) reagiert; und wobei sich der mittig gelagerte Zeiger entsprechend dem Druckabfall bewegt und sowohl eine erste Anzeige in Bezug auf den Druck in mindestens der Fluideinlassleitung (150) und der gefilterten Fluidleitung (152) liefert als auch eine zweite Anzeige, die sich auf die wirtschaftlichen Kosten bezieht, die mit dem Betrieb des Kompressors (200) mit dem Filter (300) verbunden sind, wenn er entsprechend dem Druckabfall eine bestimmte Menge an Verunreinigungen angesammelt hat.

9. Die Vorrichtung gemäß Anspruch 8, wobei der durch das Anzeigeinstrument (100) angezeigte Druck ein mit dem Filter (300) verbundener Differenzdruck ist, wobei der Differenzdruck durch einen Druck vor dem Filter (300) und einen Druck nach dem Filter (300) bestimmt wird.

10. Ein Verfahren, umfassend:
einen Kompressor (200) antreiben, um ein Fluid unter Druck zu setzen;
ein Fluid durch einen Filter (300) strömen lassen, um Verunreinigungen zu entfernen;
einen Druckabfall am Filter (300) erfassen; und
als Reaktion auf einen Druckabfall einen Zeiger und eine Skala relativ zueinander bewegen,
und **dadurch gekennzeichnet ist, dass** durch diese Bewegung ein Fluiddruckparameter und die monetären Kosten des Antriebs angezeigt werden.

11. Das Verfahren gemäß Anspruch 10,
wobei das Anzeigen umfasst, den Zeiger über eine Skala (104A, 104B; 204A, 204B, 204C) mit einer niedrigen Seite und einer hohen Seite zu führen.

12. Das Verfahren gemäß Anspruch 10,
wobei das Anzeigen umfasst, ein erstes Ende (114A; 214A) des Zeigers über eine erste Skala (104A; 204A) und ein zweites Ende (114B; 214B) des Zeigers über eine zweite Skala (104B; 204B) zu führen.

13. Das Verfahren gemäß Anspruch 10,
wobei die Anzeige die Farbkodierung von mindestens dem Druckparameter und den monetären Kosten umfasst.

## Revendications

1. Un appareil (1000) consistant en :
un compresseur (200) ;
un filtre (300) en communication fluidique avec le compresseur (200) ; le filtre (300) étant structuré pour capturer les contaminants à partir d'un fluide reçu dans celui-ci et pour fournir le fluide filtré, le filtre (300) présentant une chute de pression associée à celui-ci qui augmente par rapport à la quantité de contaminants capturés ; et
une jauge indicatrice (100) en communication fluidique avec le filtre (300), la jauge indicatrice (100) comprenant un indicateur mobile unitaire opérant pour se déplacer par rapport à la chute de pression à travers le filtre (300) ;
**caractérisé en ce que** l'indicateur mobile unitaire est structuré pour fournir une première indication visible liée à une pression et pour fournir simultanément une seconde indication visible liée à un paramètre économique associé au fonctionnement du compresseur (200) alors que le filtre (300) est dans l'état d'avoir accumulé la quantité de contaminants capturés correspondant à la chute de pression.

2. L'appareil selon la revendication 1, dans lequel le filtre (300) se trouve en amont du compresseur (200) et est conçu pour fournir le fluide filtré au compresseur (200).

3. L'appareil selon la revendication 1, dans lequel le filtre (300) se trouve en aval du compresseur (200) et est structuré pour filtrer le fluide déchargé depuis le compresseur (200).

4. L'appareil selon la revendication 1, dans lequel l'indicateur mobile unitaire est une aiguille pivotante (112 ; 212) présentant une première extrémité (114A ; 214A) et une seconde extrémité (114B ; 214B) ; dans lequel la première extrémité (114A ; 214A) fournit l'indication se rapportant à la pression ; et, dans lequel la seconde extrémité (114B ; 214B) fournit l'indication se rapportant au paramètre économique.

5. L'appareil selon la revendication 1, comprenant en outre une première prise de pression (120A) et une seconde prise de pression (120B), dans lequel la première prise de pression (120A) communique une pression en amont du filtre (300) à la jauge indicatrice (100) ; et dans lequel la seconde prise de pression (120B) communique une pression en aval du filtre (300) à la jauge indicatrice (100).

6. L'appareil selon la revendication 1, dans lequel la jauge indicatrice (100) comprend une première échelle statique codée en couleur (104A ; 204A) indiquant une pluralité de degrés de contamination du filtre (300) et dans lequel l'indicateur mobile unitaire comprend une première extrémité (114A ; 214A) appairée avec la première échelle statique codée en couleur (104A ; 204A).

7. L'appareil selon la revendication 6, dans lequel la jauge indicatrice (100) comprend une première échelle statique codée en couleur (104B ; 204B) indiquant une pluralité de degrés du paramètre économique et dans lequel l'indicateur mobile unitaire comprend une seconde extrémité (114B ; 214B) appairée avec la seconde échelle statique codée en couleur (104B ; 204B).

8. L'appareil selon l'une quelconque des revendications 1 à 7, comprenant en outre :
une conduite d'admission de fluide (150) opérant pour fournir un fluide ;
une conduite de fluide filtré (152) ; dans lequel
le filtre (300) présente une entrée en communication fluidique avec la conduite d'admission de fluide (150) et une sortie en communication fluidique avec la conduite de fluide filtré (152) et est structuré pour délivrer le fluide filtré à la conduite de fluide filtré (152) ; dans lequel
le compresseur (200) est en communication fluidique avec la conduite de fluide filtré (152) et opérant pour recevoir le fluide filtré en provenance du filtre (300) et comprimer le fluide filtré reçu ; dans lequel
la jauge indicatrice (100) est en communication fluidique avec l'entrée du filtre et la sortie du filtre et structurée pour réagir à une chute de pression à travers le filtre (200) pendant le fonctionnement du compresseur (200) ; et dans lequel l'indicateur mobile unitaire est opérant pour se déplacer par rapport à la chute de pression et pour afficher à la fois une première indication liée à une pression dans au moins l'une des conduites d'admission de fluide (150) et la conduite de fluide filtré (152) et aussi afficher une seconde indication liée à un coût économique associé au fonctionnement du compresseur (200) avec le filtre (300) ayant accumulé une quantité de contaminants capturés correspondant à la chute de pression.

9. L'appareil selon la revendication 8, dans lequel la pression indiquée par la jauge indicatrice (100) est une pression différentielle associée au filtre (300), la pression différentielle étant déterminée par une pression en amont du filtre (300) et une pression en aval du filtre (300).

10. Un procédé, consistant à :
alimenter un compresseur (200) pour pressuriser un fluide ; le fluide s'écoulant à travers un filtre (300) pour enlever les contaminants ; détecter une chute de pression à travers le filtre (300) ; et déplacer un indicateur et une échelle l'une par rapport à l'autre en réponse à la chute de pression, **caractérisé par** l'affichage d'un paramètre de pression fluide et d'un coût monétaire de l'alimentation en conséquence du déplacement.

11. Le procédé selon la revendication 10, dans laquelle l'affichage comprend le balayage de l'indicateur devant une échelle (104A, 104B, 204A, 204B, 204C) présentant un côté bas et un côté haut.

12. Le procédé selon la revendication 10, dans lequel l'affichage comprend le balayage d'une première extrémité (114A ; 214A) de l'indicateur devant une première échelle (104A ; 204A) et le balayage d'une seconde extrémité (114B ; 214B) de l'indicateur devant une seconde échelle (104B, 204B).

13. Le procédé selon la revendication 10, dans lequel l'affichage comprend le codage couleur d'au moins un parmi le paramètre de pression et le coût monétaire.
